# EUROPÄISCHE PATENTSCHRIFT

(11) **EP 1 255 030 B1**
(45) Veröffentlichungstag und Bekanntmachung des Hinweises auf die Patenterteilung: **13.10.2004**
(21) Anmeldenummer: 02017885.1
(22) Anmeldetag: 26.06.1998
(51) Int. Cl.: F02B 25/04, F02B 47/02

(54) **Zweitakt-Dieselbrennkraftmaschine**
Two stroke diesel engine
Moteur diesel du type à deux temps

(43) Veröffentlichungstag der Anmeldung: 06.11.2002
(62) Teilanmeldung aus: 98810597.9
(73) Patentinhaber: Wärtsilä Schweiz AG, 8401 Winterthur (CH)
(72) Erfinder: Wyss, Rolf, 8330 Pfäffikon (CH)
(74) Vertreter: Sulzer Management AG

(56) Entgegenhaltungen:
- EP-A- 0 653 558
- EP-A- 0 774 571
- WO-A-93/22549
- US-A- 5 746 163

## Beschreibung

Die Erfindung betrifft eine Zweitakt-Dieselbrennkraftmaschine mit Längsspülung, insbesondere einen Grossdieselmotor, gemäss dem Oberbegriff des unabhängigen Patentanspruchs.

Beim Betrieb von Dieselbrennkraftmaschinen entstehen im allgemeinen beträchtliche Mengen von umweltbelastenden Stickstoffoxiden (NOx). Zum Schutz der Umwelt sind daher erhebliche Anstrengungen unternommen worden, Dieselmotoren mit deutlich reduzierter NOx-Emission zu entwickeln. Die Verminderung der NOx-Emission kann beispielsweise mittels selektiver katalytischer Reduktion der Stickstoffoxide realisiert werden. Insbesondere bei Grossdieselmotoren, wie sie typischerweise zum Antreiben von Schiffen verwendet werden, ist es aber häufig aus Platzgründen sehr schwierig - wenn überhaupt möglich -, entsprechend dimensionierte Katalysatorvorrichtungen vorzusehen. Daher hat man sich unter anderem auf die Entwicklung von sogenannten Primärmassnahmen konzentriert, bei welchen das Entstehen der Stickstoffoxide im Brennraum des Zylinders vermindert wird.

Auch für längsgespülte Zweitakt-Grossdieselmotoren ist es beispielsweise bekannt, dass der Spülluft oder Frischluft ausserhalb des Zylinders Verbrennungsgase beigemischt werden (externe Abgas-Rezirkulation), um dadurch den Sauerstoffgehalt der Spülluft zu reduzieren. Dies bewirkt eine Senkung der beim Verbrennungsprozess entstehenden NOx-Menge. Nachteilig an dieser Lösung ist jedoch, dass entweder zumindest ein Teil der Verbrennungsgase durch den Kompressor der Aufladergruppe (Turbolader) geführt werden muss, was zu erheblichen Verschmutzungen im Kompressor und im nachgeschalteten Ladeluftkühler führt, oder eine weitere Pumpe zum Komprimieren der Verbrennungsgase vorgesehen werden muss, falls die Verbrennungsgase der Frischluft erst auf der Hochdruckseite des Kompressors zugeführt weden. Dabei ist im letzteren Fall aber ebenfalls eine nachteilige Verschmutzung des Ladeluftkühlers möglich.

In der EP-A-653 558 wird deshalb ein Verfahren zum Vermindern der Stickstoffoxidmenge im Abgas eines Zweitakt-Grossdieselmotors mit einer eine Turbine und einen Kompressor umfassenden Aufladegruppe vorgeschlagen, das als interne Abgas-Rezirkulation bezeichnet werden kann. Gemäss diesem Verfahren wird jeweils ein Teil der Verbrennungsgase, die beim Verbrennungsprozess entstehen, im Zylinder zurückbehalten. Diese zurückbehaltenen Abgase bilden beim folgenden Kompressionshub ein Gemisch mit der eingeströmten Frischluft, das dann im Vergleich zur Frischluft eine verminderte Sauerstoffkonzentration aufweist, sodass beim anschliessenden Verbrennungsprozess weniger Stickstoffoxide entstehen. Es wird also bewusst eine verschlechterte bzw. reduzierte Spülung in dem Sinne realisiert, dass die Ausspülung der Verbrennungsgase aus dem Zylinder unvollständig ist und ein beträchtlicher Teil der Abgase jeweils im Zylinder zurückbleibt.

Das Zurückbehalten eines Teils der Verbrennungsgase im Zylinder wird gemäss der EP-A-653 558 durch Mittel erreicht, die ausserhalb des Zylinders vorgesehen sind. So wird vorgeschlagen, zwischen dem Austritt des Kompressors und dem Eintritt des Zylinders einen Teil der Frischluft zu entnehmen, sodass eine geringere Frischluftmenge als normalerweise üblich in den Zylinder eintritt, die weniger Verbrennungsgase als üblich beim Kompressionshub verdrängt. Alternativ wird auch vorgeschlagen, einen Teil der aus dem Zylinder austretenden Verbrennungsgase an der Turbine der Aufladergruppe vorbeizuführen, sodass eine entsprechend kleinere Frischluftmenge vom Kompressor zum Zylinder gefördert wird. Bei dieser Variante wird also die Frischluftzufuhr dadurch reduziert, dass die Leistung der den Kompressor antreibenden Turbine vermindert wird.

Insbesondere bei grossen Mengen von im Zylinder zurückbehaltenen Verbrennungsgasen kann sich die Temperatur im Zylinder stärker erhöhen.

Dem kann gemäss der EP-A-653 558 dadurch entgegengewirkt werden, dass zumindest während eines Teils des Kompressionshubs Wasser in das im Zylinder befindliche Frischluft/Abgasgemisch gespritzt wird.

Weiterhin beschreibt US-A-5.746.163 eine Zweitakt Dieselbrennkraftmaschine , worin ein Teil der Verbrennungsgase durch Verschiebung des Öffnungs- und Schliesszeitpunktes des Auslassventils Zurückgehalten wird.

Ausgehend von diesem Stand der Technik, ist es eine Aufgabe der Erfindung, eine andere Zweitakt-Dieselbrennkraftmaschine mit Längsspülung bereitzustellen, bei der eine Verminderung der Emission von Stickstoffoxiden dadurch erreicht wird, dass die Spülung des Zylinders bewusst in dem Sinne verschlechtert wird, dass ein Teil der beim Verbrennungsprozess entstehenden Abgase im Zylinder verbleibt. Insbesondere soll die Erfindung einen derartigen Grossdieselmotor ermöglichen, der einen hohen Wirkungsgrad hat.

Die diese Aufgabe lösende Zweitakt-Dieselbrennkraftmaschine ist durch die Merkmale des unabhängigen Patentanspruchs gekennzeichnet.

Erfindungsgemäss wird also eine Zweitakt-Dieselbrennkraftmaschine mit Längsspülung, insbesondere ein Grossdieselmotor, vorgeschlagen mit mindestens einem Zylinder, in welchem ein Kolben hin- und herbewegbar angeordnet ist, und welcher Zylinder ein Auslassventil zum Abführen von Verbrennungsgasen aufweist sowie mehrere Spülluftöffnungen, durch die Spülluft in den Zylinder einbringbar ist. Am Zylinder sind Mittel zum Reduzieren der Spülung vorgesehen, sodass jeweils ein Teil der beim Verbrennungsprozess entstehenden Verbrennugsgase im Zylinder bleibt.

Im Unterschied zur EP-A-653 558, die Mittel zum Zurückbehalten eines Teils der Abgase im Zylinder vorschlägt, welche Mittel ausserhalb des Zylinders angeordnet sind, sind bei der erfindungsgemässen Dieselbrennkraftmaschine solche Mittel direkt am Zylinder vorgesehen bzw. in diesen integriert. Die erfindungsgemässe Lösung, den gewünschten Effekt der unvollständigen Spülung zur Verminderung der NOx-Emission durch Mittel am Zylinder zu erzielen, ist besonders einfach und apparativ wenig aufwendig, weil im Prinzip keine zusätzlichen baulichen Massnahmen ausserhalb des Zylinders, beispielsweise zum Abführen von Frischluft zwischen Kompressor und Zylinder, vonnöten sind.

Als ein Mittel zum Reduzieren der Spülung kann die axiale Höhe der Spülluftöffnungen dienen. In einer bevorzugten Ausführung beträgt die axiale Höhe der Spülluftöffnungen, das heisst ihre Ausdehnung in Richtung der Längsachse des Zylinders, weniger als fünf Prozent, insbesondere weniger als vier Prozent, des Hubs des Kolbens. Aufgrund der praktischen Erfahrung sind dabei speziell solche Ausgestaltungen besonders bevorzugt, bei welchen die Spülluftöffnungen eine axiale Höhe von etwa 2 Prozent bis etwa 3 Prozent des Hubs des Kolbens aufweisen. Durch diese im Vergleich zu bekannten Grossdieselmotoren mit Längsspülung stark gedrückte Ausgestaltung der Spülluftöffnungen bezüglich der Richtung der Längsachse des Zylinders wird der Strömungsquerschnitt für die einströmende Frischluft bzw. Spülluft reduziert, sodass ein grosser Druckabfall über die Spülluftöffnungen und damit eine schlechte Spülung des Zylinders im obengenannten Sinne erreicht wird. Somit bleibt ein Teil der beim vorangehenden Verbrennungsprozess entstandenen Verbrennungsgase im Zylinder zurück, woraus eine deutliche Verminderung der beim nächsten Verbrennungsprozess entstehenden Stickstoffoxide resultiert.

Als Mittel zum Reduzieren der Spülung kann auch der Strömungsquerschnitt des Auslassventils dienen. Durch Reduzieren dieses Strömungsquerschnitts im Vergleich zu herkömmlichen Dieselmotoren lässt es sich ebenfalls realisieren, dass jeweils ein Teil der beim Verbrennungsprozess entstehenden Verbrennungsgase im Zylinder bleibt. In der Praxis hat es sich bewährt, das Auslassventil so auszugestalten, dass das Verhältnis aus dem Strömungsquerschnitt des Auslassventils und der Bohrung des Zylinders höchstens 0.4 ist und insbesondere zwischen etwa 0.3 und 0.4 liegt.

Der Effekt der verschlechterten bzw. reduzierten Spülung lässt sich sowohl alleine durch eine entsprechende Ausgestaltung der Spülluftöffnungen als auch alleine durch eine entsprechende Ausgestaltung des Auslassventils erzielen. Bevorzugt werden jedoch solche Ausführungsformen der Erfindung, bei denen beide Massnahmen kombiniert sind, bei denen also die Spülluftöffnungen eine geringe axiale Höhe aufweisen und das Auslassventil einen vergleichsweise kleinen Strömungsquerschnitt. Insbesondere durch ein optimales Kombinieren beider Massnahmen lässt sich ein besonders wirtschaftlicher und gleichzeitig schadstoffarmer Grossdieselmotor realisieren.

Da der Luftvolumenstrom in den Zylinder im Vergleich zu bekannten Grossdieselmotoren deutlich kleiner ist, beispielsweise um etwa 30%, können für die erfindungsgemässe Dieselbrennkraftmaschine auch kleinere oder zahlenmässig weniger Aufladegruppen (Turbolader) und Ladeluftkühler verwendet werden. Dies ist vorteilhaft, weil sich zum einen der Platzbedarf reduziert und zum anderen weniger Kosten für diese Bauteile anfallen.

Die gedrückte Ausgestaltung der Spülluftöffnungen, das heisst ihre reduzierte axiale Höhe bezogen auf den Hub des Kolbens, hat zusätzlich den grossen Vorteil, dass der Expansionshub des Kolbens wesentlich länger ist. Dies ist insbesondere unter thermodynamischen Aspekten günstig, weil ein verbesserter Wirkungsgrad und ein reduzierter Brennstoffverbrauch resultiert, sodass die Dieselmaschine wirtschaftlicher arbeitet.

Eine weitere vorteilhafte Massnahme besteht darin, bei der erfindungsgemässen Zweitakt-Dieselbrennkraftmaschine ferner mindestens eine Wassereinspritzdüse zum Einbringen von Wasser in den Zylinder vorzusehen. Hierdurch lässt sich einer starken Erhöhung des Temperaturniveaus im Zylinder, die durch die Reduzierung der Spülung verursacht werden könnte, effizient entgegenwirken. Dabei wird die Wassereinspritzdüse bevorzugt so gesteuert, dass das Einbringen des Wassers während des Kompressionshubs des Kolbens erfolgt. Die Wassereinspritzdüse ist vorzugsweise derart angeordnet, dass das Wasser hauptsächlich in die heissen Verbrennungsgase eingespritzt wird und schnell verdampft. Hierzu ist die Wassereinspritzdüse zum Beispiel im Zylinderdeckel im Bereich der Brennstoffeinspritzdüsen vorgesehen.

Insbesondere in Kombination mit den stark gedrückten Spülluftöffnungen und/oder dem vergleichsweise kleinen Strömungsquerschnitt des Auslassventils lässt sich dadurch ein thermodynamisch besonders günstiger und wirtschaftlicher Betrieb des Dieselmotors erzielen. Speziell durch die gedrückte Ausgestaltung der Spülluftöffnungen und die dadurch bedingte relative Verkürzung derjenigen Zeit, während der die Spülluftöffnungen nicht vom Kolben abgedeckt sind, existiert beim Kompressionshub des Kolbens zunächst eine Schichtung der Gase im Zylinder, wobei die relativ kühle Frischluft bzw. Spülluft hauptsächlich im unteren, näher an den Spülluftöffnungen liegenden Bereich des Zylinders konzentriert ist, und die heissen Verbrennungsgase, die vom vorigen Verbrennungsvorgang stammen, im oberen, näher am Auslassventil liegenden Bereich des Zylinders konzentriert sind. Durch diese anfängliche Schichtbildung der Gase ist es somit möglich, das Wasser hauptsächlich in die noch heissen Verbrennungsgase einzuspritzen, bevor sich diese wesentlich mit der Frischluft vermischt haben. Daraus resultiert eine sehr gute Verdampfung des eingespritzten Wassers, was sich günstig auf den nächsten Verbrennungsprozess auswirkt.

Vorzugsweise wird die Wassereinspritzdüse so gesteuert, dass sie das Wasser unmittelbar nach dem Schliessen des Auslassventils in den Zylinder einspritzt, weil dann die Schichtbildung der Gase im Zylinder am stärksten ausgeprägt ist. Das Einbringen des Wassers wird bevorzugt beendet, bevor die Einspritzung des Brennstoffs in den Zylinder beginnt.

Auch ist es speziell bei Grossdieselmotoren vorteilhaft, wenn an jedem Zylinder mehrere Wassereinspritzdüsen vorgesehen sind, insbesondere um eine möglichst gleichmässige Verteilung des Wassers im oberen, dem Auslassventil zugewandten Bereich des Zylinders zu erreichen. Die Anzahl der Wassereinspritzdüsen pro Zylinder kann beispielsweise gleich der Anzahl der Brennstoffeinspritzdüsen pro Zylinder sein.

Insbesondere durch die Kombination der gedrückten Spülluftschlitze und/oder des kleinen Strömungsquerschnitts des Auslassventils mit der Wassereinspritzung wird eine Zweitakt-Dieselbrennkraftmaschine ermöglicht, die sowohl bezüglich der NOx-Emission auch sehr strenge Vorschriften einhält und unter den zum Umweltschutz erstellten Grenzwerten liegt, als auch einen geringen Brennstoffverbrauch aufweist, der zumindest nicht über demjenigen von vergleichbaren Grossdieselmotoren liegt, die ohne Wassereinspritzung arbeiten. Vorteilhaft ist ferner, dass eine solche wirtschaftliche und schadstoffarme Dieselbrennkraftmaschine im Vergleich zu bekannten Maschinen kostenneutral herstellbar ist. Im Vergleich zu Lösungen mit Katalysatorvorrichtungen ist die erfindungsgemässe Dieselbrennkraftmaschine in der Regel kostengünstiger herstellbar.

Weitere vorteilhafte Massnahmen und bevorzugte Ausgestaltungen der Erfindung ergeben sich aus den abhängigen Ansprüchen.

Im folgenden wird die Erfindung anhand der Zeichnung und anhand eines Ausführungsbeispiels näher erläutert. In der schematischen, nicht massstäblichen Zeichnung zeigt die einzige Figur:

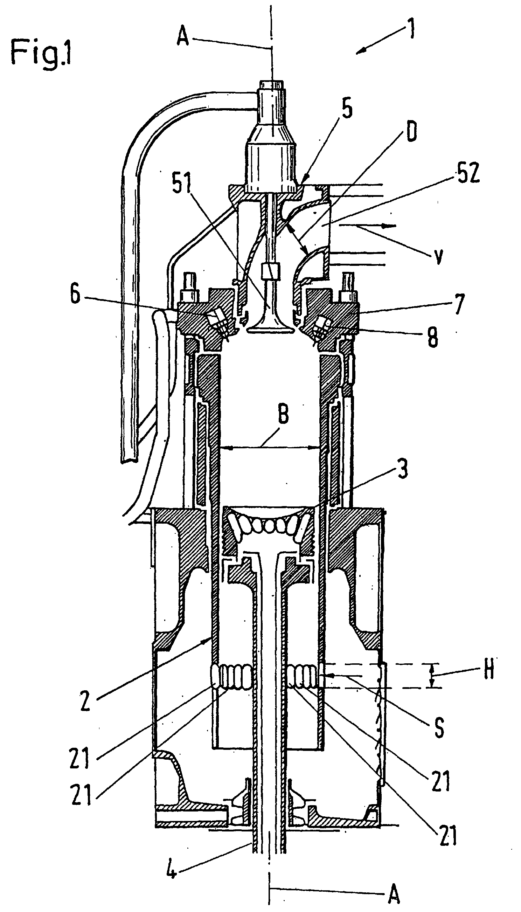

- Fig. 1:: eine teilweise symbolische Darstellung von wesentlichen Teilen eines Ausführungsbeispiels der erfindungsgemässen Zweitakt-Dieselbrennkraftmaschine.

Fig. 1 zeigt in einer schematischen Darstellung einen der üblicherweise mehreren Zylinder 2 eines Ausführungsbeispiels der erfindungsgemässen Zweitakt-Dieselbrennkraftmaschine, die gesamthaft mit dem Bezugszeichen 1 versehen ist. Die Zweitakt-Dieselbrennkraftmaschine 1, die nach dem Prinzip der Längsspülung arbeitet, ist als Grossdieselmotor ausgestaltet, der beispielsweise zum Antreiben eines Schiffs geeignet ist. In dem Zylinder 2 ist ein Kolben 3 entlang der Längsachse A des Zylinders 2 hin- und herbeweglich angeordnet. Die Bohrung B des Zylinders 2 beträgt bei einem Grossdieselmotor typischerweise bis zu etwa 1000 mm.

Der Kolben 3 ist in an sich bekannter Weise mittels einer Kolbenstange 4 mit einem nicht dargestellten Kreuzkopf verbunden, der andererseits an eine Schubstange (nicht dargestellt) angelenkt ist, die mit einer Kurbelwelle (nicht dargestellt) verbunden ist.

Der Zylinder 2 wird an seiner darstellungsgemäss oberen Seite von einem Zylinderdeckel 7 abgeschlossen, in welchem ein zentral zur Längsachse A angeordnetes Auslassventil 5 zum Abführen von Verbrennungsgasen vorgesehen ist wie dies der mit dem Bezugszeichen V versehene Pfeil symbolisch andeutet. Das Auslassventil 5 umfasst einen Auslasskanal 52, durch welchen die Verbrennungsgase aus dem Brennraum des Zylinders in ein Abgassystem abströmen können (Pfeil V), sowie einen betätigbaren Ventilteller 51, der je nach seiner Stellung den Durchgang zwischen dem Brennraum und dem Auslasskanal 52 freigibt oder verschliesst.

Eine oder - wie für Grossdieselmotoren üblich - mehrere Brennstoffeinspritzdüsen 6, durch welche Brennstoff in den Zylinder 2 einbringbar ist, sind ebenfalls im Zylinderdeckel 7 angeordnet. Bei dem hier beschriebenen Ausführungsbeispiel ist ferner mindestens eine Wassereinspritzdüse 8 zum Einspritzen von Wasser in den Zylinder 2 vorgesehen, die auch im Zylinderdeckel 7 angeordnet ist. Um eine homogene Wassereinspritzung zu realisiern, sind vorzugsweise mehrere Wassereinspritzdüsen 8 vorgesehen, beispielsweise gleich viele wie Brennstoffeinspritzdüsen 6. Die Wassereinspritzdüse 8 ist mit einer nicht dargestellten Wassereinspritzvorrichtung verbunden, welche die Wassereinspritzdüse 8 mit Wasser versorgt und so ansteuert, dass die Wassereinspritzung im gewünschten Zeitraum, bezogen auf den Arbeitszyklus des Motors, und mit dem gewünschten Druck erfolgt. Vorzugsweise ist die Wassereinspritzvorrichtung gemäss dem Common-Rail-Prinzip ausgebildet.

Im darstellungsgemäss unteren Bereich des Zylinders 2 sind mehrere Spülluftöffnungen 21 vorgesehen, durch die Frischluft, die auch als Spülluft bezeichnet wird, in den Zylinder 2 einbringbar ist, wie dies symbolisch durch den mit dem Bezugszeichen S versehenen Pfeil angedeutet ist. Sobald der Kolben 3 bei seinem Expansionshub, der darstellungsgemäss nach unten erfolgt, die Spülluftöffnungen 21 passiert, kann durch die Spülluftöffnungen 21 Frischluft in den Innenraum des Zylinders 2 einströmen. Beim anschliessenden Kompressionshub verschliesst der Kolben 3 die Spülluftöffnungen 21, sodass keine weitere Spülluft in den Innenraum des Zylinders 2 gelangen kann.

Das Auslassventil 5 und die Spülluftöffnungen 21 sind derart ausgestaltet, dass jeweils ein Teil der beim Verbrennungsprozess entstehenden Verbrennungsgase im Zylinder verbleibt, um dadurch die Sauerstoffkonzentration des Gases im Zylinder (Frischluft und Verbrennungsgase) zu reduzieren. Durch diese Massnahmen entstehen im anschliessenden Verbrennungsprozess deutlich weniger Stickstoffoxide, wodurch die Dieselbrennkraftmaschine 1 im Betrieb weniger umweltbelastende Schadstoffe produziert.

Bei dem hier beschriebenen bevorzugten Ausführungsbeispiel ist das Auslassventil 5 so ausgestaltet, dass sein Strömungsquerschnitt D, der im wesentlichen dem Durchmesser des Auslasskanals 52 entspricht, höchstens das 0.4-fache der Bohrung B des Zylinders 2 beträgt. Vorzugsweise liegt das Verhältnis aus dem Strömungsquerschnitt D des Auslassventils 5 und der Bohrung B des Zylinders 2 zwischen etwa 0.3 und 0.4. Aufgrund dieses vergleichsweise kleinen Strömungsquerschnitts D des Auslassventils 5 wird der Volumenstrom der aus dem Brennraum des Zylinders 2 abströmenden Gase reduziert, sodass die gewünschte Verschlechterung der Spülung des Zylinders 2 resultiert.

Als Spülluftöffnungen 21 sind mehrere Spülluftschlitze 21 vorgesehen, die über den Umfang des Zylinders 2 verteilt sind, und die sich jeweils in axialer Richtung, womit die Richtung der Längsachse A des Zylinders 2 gemeint ist, erstrecken. Die Spülluftöffnungen 21 weisen eine axiale Höhe H auf - womit ihre Erstreckung in Richtung der Längsachse A des Zylinders 2 gemeint ist -, die weniger als fünf Prozent, insbesondere weniger als vier Prozent, und speziell bevorzugt zwischen etwa 2 und 3 Prozent des Hubs des Kolbens 3 beträgt. Unter dem "Hub des Kolbens" ist dabei sein geometrischer Hub, das heisst die Strecke zwischen seinen beiden Totpunkten, zu verstehen.

Diese im folgenden als "gedrückt" bezeichnete Ausgestaltung der Spülluftöffnungen 21 hat zur Folge, dass der Strömungsquerschnitt für die in den Zylinder 2 einströmende Spülluft im Vergleich zu bekannten Dieselmotoren stark reduziert ist und ein starker Druckabfall über die Spülluftöffnungen 21 herrscht. Ferner wird die Zeitspanne, während der die Spülluft durch die Spülluftöffnungen 21 in den Innenraum des Zylinders gelangen kann, durch die gedrückte Ausgestaltung verkürzt, sodass insgesamt eine schlechtere Spülung des Zylinders 2 resultiert, da der Luftvolumenstrom an Spülluft im Vergleich zu herkömmlichen Spülluftschlitzen deutlich geringer ist, beispielsweise um 30 Prozent. Die schlechte Spülung, die bei diesem Ausführungsbeispiel durch die Kombination von gedrückt ausgestalteten Spülluftöffnungen 21 und reduziertem Strömungsquerschnitt D des Auslassventils 5 erzielt wird, bedeutet, dass nicht die gesamten durch die Verbrennung entstehenden Verbrennungsgase während der Spülphase durch das Auslassventil 5 abgeführt werden, sondern dass ein Teil dieser Verbrennungsgase im Zylinder 2 verbleibt.

Die gedrückte Ausgestaltung der Spülluftöffnungen 21 hat ferner den Vorteil, dass sich der Expansionshub des Kolbens deutlich verlängert, wodurch das Kompressionsverhältnis erhöht wird. Dies ist insbesondere unter thermodynamischen Aspekten günstig. Der Wirkungsgrad der Dieselbrennkraftmaschine erhöht sich und der Brennstoffverbrauch wird gesenkt.

Die Beschickung des Zylinders 2 mit Spülluft kann zum Beispiel mit einer Aufladergruppe erfolgen, die eine Turbine und einen Kompressor umfasst. Solche Aufladergruppen sind an sich hinreichend bekannt und werden deshalb hier nur kurz erläutert. Die durch den Auslasskanal 52 des Auslassventils 5 ausströmenden Verbrennungsgase (Pfeil V) gelangen zunächst zu einem Abgasreceiver, in dem üblicherweise die Verbrennungsgase mehrerer Zylinder zusammengeführt werden. Von dort strömen die Gase zu der Turbine der Aufladergruppe und treiben diese an. Die Turbine treibt einen Kompressor an, der Frischluft ansaugt und diese komprimiert. Vom Kompressor gelangt die Frischluft durch einen Ladeluftkühler zu einem Einlassreceiver, der üblicherweise mit mehreren Zylindern 2 verbunden ist. Zwischen dem Einlassreceiver, in welchem sich die Frischluft unter Druck befindet, und dem Zylinder 2 befindet sich ein Verteilerring, durch welchen die Frischluft zu den Spülluftöffnungen 21 des Zylinders gelangt.

Insbesondere bei Grossdieselmotoren mit vielen Zylindern 2 sind üblicherweise mehrere Aufladergruppen für den gesamten Motor vorgesehen, damit das zur Spülung benötigte Volumen an Druckluft bereitgestellt werden kann. Da die erfindungsgemässe Dieselbrennkraftmaschine bei der Spülung mit einem deutlich reduzierten Luftvolumenstrom arbeitet, können die einzelnen Komponenten der Aufladergruppe, wie die Turbine, der Kompressor oder der Ladeluftkühler, jeweils deutlich kleiner dimensioniert werden, oder es kann eine geringere Anzahl von Aufladergruppen vorgesehen werden. Dies ist insbesondere aus Platzgründen und unter wirtschaftlichen Aspekten ein Vorteil.

Im Folgenden wird nun der Betrieb des bevorzugten Ausführungsbeispiels der erfindungsgemässen Zweitakt-Dieselbrennkraftmaschine anhand von einem möglichen Arbeitszyklus erläutert.

Wenn sich der Kolben 3 im Bereich seines oberen Totpunkts befindet, entzündet sich das Brennstoff-Gas-Gemisch. Der Kolben 3 führt seinen Expansionshub aus, das heisst er bewegt sich darstellungsgemäss nach unten. Im Verlauf dieses Expansionshubs wird das Auslassventil 5 geöffnet, sodass die Verbrennungsgase aus dem Zylinder 2 strömen können. Sobald die Oberkante des Kolbens 3 die Spülluftöffnungen 21 passiert, beginnt die von der Aufladergruppe bereitgestellte Frischluft in den Zylinder 2 zu strömen. Nachdem der Kolben 3 den unteren Totpunkt durchlaufen hat, beginnt der Kompressionshub des Kolbens 3, das heisst er bewegt sich darstellungsgemäss nach oben. Sobald die Oberkante des Kolbens 3 die Spülluftöffnungen 21 passiert, verschliesst er diese, sodass keine weitere Spülluft in den Innenraum des Zylinders 2 gelangen kann. Im Verlauf des weiteren Kompressionshubs wird das Auslassventil 5 geschlossen, sodass kein Gas mehr durch dieses austreten kann. Die eigentliche Kompression beginnt. Durch die gedrückte Ausgestaltung der Spülluftöffnungen 21, das heisst ihre vergleichsweise geringe axiale Höhe H, ist zum einen der Strömungsquerschnitt für die Spülluft kleiner und zum anderen die Zeitspanne, während der Spülluft in den Zylinder 2 gelangen kann, verkürzt. Dies hat in Kombination mit dem reduzierten Strömungsquerschnitt D des Auslassventils 5 die bereits erwähnte schlechte Spülung zur Folge, was bedeutet, dass nach dem Schliessen des Auslassventils 5 noch ein Teil der Verbrennungsgase im Zylinder ist. Ferner bewirkt die gedrückte Ausgestaltung, dass die Durchmischung der Spülluft und der Verbrennungsgase im Zylinder 2 langsamer erfolgt. Nach dem Schliessen des Auslassventils liegen deshalb die Frischluft und die Verbrennungsgase im wesentlichen noch in einer geschichteten Form vor. Die noch verbliebenen, heissen Verbrennungsgase befinden sich hauptsächlich im darstellungsgemäss oberen Teil des Zylinders 2, während die Frischluft im unteren Bereich des Zylinders 2 konzentriert ist. In dieser Phase der Schichtung der Gase erfolgt vorzugsweise das Einspritzen des Wassers in den Zylinder 2 mittels der Wassereinspritzdüse 8. Die Wassereinspritzvorrichtung steuert die Wassereinspritzdüse 8 also derart, dass die Wassereinspritzung vorzugsweise unmittelbar nach dem Schliessen des Auslassventils 5 beginnt. Folglich wird das Wasser aufgrund der Schichtung von dem Verbrennungsgas und der Spülluft hauptsächlich in das noch heisse Verbrennungsgas eingespritzt, sodass eine besonders gute Verdampfung des Wassers gewährleistet ist. Die Wassereinspritzung, die eine effiziente Senkung des Temperaturniveaus im Zylinder bewirkt, kann beispielsweise über einen Kurbelwinkel von etwa 10° bis 30° erfolgen. Vorzugsweise steuert die Wassereinspritzvorrichtung die Wassereinspritzdüse 8 so, dass die Wassereinspritzung beendet ist, bevor die Brennstoffeinspritzung beginnt. Im weiteren Verlauf des Kompressionshubs durchmischen sich die jetzt durch das Wasser gekühlten Verbrennungsgase mehr und mehr mit der Spülluft, sodass ein Gasgemisch entsteht, das im Vergleich zur Spülluft einen deutlich gesenkten Sauerstoffgehalt aufweist. Wenn sich der Kolben 3 im Bereich seines oberen Totpunkts befindet, erfolgt die Einspritzung des Brennstoffs mittels der Brennstoffeinspritzdüse(n) 8 in dieses sauerstoffarme Gasgemisch. Bei der anschliessenden Verbrennung entstehen dann deutlich weniger Stickstoffoxide. Nach der Verbrennung beginnt dann der beschriebene Arbeitszyklus von Neuem.

Prinzipiell ist es natürlich auch möglich, die erfindungsgemässe Dieselbrennkraftmaschine, abweichend von dem hier beschriebenen bevorzugten Ausführungsbeispiel, so auszugestalten, dass keine Wassereinspritzung erfolgt.

Insbesondere durch die vorangehend beschriebene bevorzugte Ausführungform der Erfindung mit der Kombination aus den gedrückt ausgestalteten Spülluftöffnungen 21, dem kleinen Strömungsquerschnitt D des Auslassventils 5 und der Wassereinspritzung wird ein optimal abgestimmter Zweitakt-Grossdieselmotor mit Längsspülung ermöglicht, der einerseits durch die Verminderung der Schadstoffemission auch unter streng festgelegten Grenzwerten bleibt, und der andererseits einen deutlich besseren Wirkungsgrad sowie insbesondere einen reduzierten Brennstoffverbrauch im Vergleich zu bekannten Grossdieselmotoren mit Wassereinspritzung aufweist.

Die Praxis hat gezeigt, dass insbesondere mit Spülluftöffnungen, die eine axiale Höhe H von etwa 2 Prozent bis 3 Prozent des Hubs des Kolbens 3 aufweisen, eine besonders günstige Kombination aus verschlechterter (reduzierter) Spülung und thermodynamisch vorteilhafter Verlängerung des Expansionshubs resultiert.

Natürlich kann die reduzierte Spülung bei der erfindungsgemässen Zweitakt-Dieselbrennkraftmaschine auch dadurch realisiert werden, dass nur eine der beiden beschriebenen Massnahmen, nämlich die gedrückte Ausgestaltung der Spülluftöffnungen 21 einerseits und der kleine Strömungsquerschnitt D des Auslassventils 5 andererseits, realisiert ist. Vorzugsweise werden aber beide Massnahmen miteinander kombiniert, weil es sich dadurch z. B. vermeiden lässt, dass die Strömungsgeschwindigkeit der Spülluft an den Spülluftöffnungen unerwünscht hohe Werte annimmt.

Es versteht sich, dass es auch bei der erfindungsgemässen Dieselbrennkraftmaschine möglich ist, nicht das gesamte durch das Auslassventil 5 ausströmende Verbrennungsgas der Turbine der Aufladergruppe zuzuführen, sondern, wie beispielsweise in der bereits zitierten EP-A-653 558 beschrieben, einen Teil der ausströmenden Verbrennungsgase an der Turbine vorbeizuleiten.

## Patentansprüche

1. Zweitakt-Dieselbrennkraftmaschine mit Längsspülung, insbesondere Grossdieselmotor, mit mindestens einem Zylinder (2), in welchem ein Kolben (3) hin- und herbewegbar angeordnet ist, und welcher Zylinder (2) ein Auslassventil (5) zum Abführen von Verbrennungsgasen aufweist, sowie mehrere Spülluftöffnungen (21), durch die Spülluft in den Zylinder (2) einbringbar ist, wobei am Zylinder (2) Mittel zum Reduzieren der Spülung vorgesehen sind, sodass jeweils ein Teil der beim Verbrennungsprozess entstehenden Verbrennungsgase im Zylinder (2) bleibt, **dadurch gekennzeichnet dass** als Mittel zum Reduzieren der Spülung der Strömungsquerschnitt (D) des Auslassventils (5) dient, wobei das Verhältnis aus dem Strömungsquerschnitt (D) des Auslassventils (5) und der Bohrung (B) des Zylinders (2) höchstens 0.4 ist.

2. Zweitakt-Dieselbrennkraftmaschine nach Anspruch 1, bei welcher das Verhältnis aus dem Strömungsquerschnitt (D) des Auslassventils (5) und der Bohrung (B) des Zylinders (2) zwischen etwa 0.3 und 0.4 liegt.

3. Zweitakt-Dieselbrennkraftmaschine nach einem der vorangehenden Ansprüche, wobei ferner eine Wassereinspritzdüse (8) zum Einbringen von Wasser in den Zylinder (2) vorgesehen ist.

4. Zweitakt-Dieselbrennkraftmaschine nach Anspruch 3, bei welcher die Wassereinspritzdüse (8) derart angeordnet ist, dass das Wasser hauptsächlich in die Verbrennungsgase eingespritzt wird.

5. Zweitakt-Dieselbrennkraftmaschine nach einem der Ansprüche 3-4, bei welcher die Wassereinspritzdüse (8) so gesteuert wird, dass sie das Wasser nach dem Schliessen des Auslassventils (5) in den Zylinder (2) einspritzt.

6. Zweitakt-Dieselbrennkraftmaschine nach einem der Ansprüche 3-5, bei welcher die Wassereinspritzdüse (8) so gesteuert wird, dass das Einbringen des Wassers beendet ist, bevor die Einspritzung des Brennstoffs beginnt.

7. Zweitakt-Dieselbrennkraftmaschine nach einem der Ansprüche 3-6, bei welcher an jedem Zylinder (2) mehrere Wassereinspritzdüsen (8) vorgesehen sind.

## Claims

1. A two-stroke diesel combustion engine with longitudinal scavenging, in particular a large diesel engine, comprising at least one cylinder (2) in which a piston (3) is arranged so as to be movable back and forth, said cylinder (2) having an outlet valve (5) for conveying away combustion gases and a plurality of scavenging air openings (21) through which scavenging air can be introduced into the cylinder (2), wherein means for the reduction of the scavenging are provided at the cylinder (2) so that in each case a portion of the combustion gases which arise in the combustion process remains in the cylinder (2) **characterised in that** the flow cross-section (D) of the outlet valve (5) serves as a means for the reduction of the scavenging, with the ratio of the flow cross-section (D) of the outlet valve (5) to the bore (B) of the cylinder (2) being at most 0.4.

2. A two-stroke diesel combustion engine in accordance with claim 1 in which the ratio of the flow cross-section (D) of the outlet valve (5) to the bore (B) of the cylinder (2) lies between approximately 0.3 and 04.

3. A two-stroke diesel combustion engine in accordance with one of the preceding claims, with a water injection nozzle (8) being additionally provided for the introduction of water into the cylinder (2).

4. A two-stroke diesel combustion engine in accordance with claim 3 in which the water injection nozzle (8) is arranged in such a manner that the water is mainly injected into the combustion gases.

5. A two-stroke diesel combustion engine in accordance with one of the claims 3 to 4 in which the water injection nozzle (8) is controlled in such a manner that it injects the water into the cylinder (2) after the closing of the outlet valve (5).

6. A two-stroke diesel combustion engine in accordance with one of the claims 3 to 5 in which the water injection nozzle (8) is controlled in such a manner that the introduction of the water is terminated before the injection of the fuel begins.

7. A two-stroke diesel combustion engine in accordance with one of the claims 3 to 6 in which a plurality of water injection nozzles (8) is provided at each cylinder (2).

## Revendications

1. Moteur Diesel à deux temps à balayage longitudinal, en particulier grand moteur Diesel, avec au moins un cylindre (2), dans lequel un piston (3) est déplacé de façon à exécuter un mouvement alternatif, ledit cylindre (2) présentant une soupape d'échappement (5) pour l'évacuation des gaz d'échappement ainsi que plusieurs ouvertures d'air de balayage (21) à travers lesquelles l'air de balayage peut être introduit dans le cylindre (2), où sont prévus au cylindre (2) des moyens pour réduire le balayage de sorte qu'à chaque fois, une partie des gaz de combustion produits lors du processus de combustion reste dans le cylindre (2), **caractérisé en ce que** la section transversale d'écoulement (D) de la soupape d'échappement (5) sert de moyen pour réduire le balayage, où le rapport de la section transversale d'écoulement (D) de la soupape d'échappement (5) et de l'alésage (B) du cylindre (2) est au plus de 0,4.

2. Moteur Diesel à deux temps selon la revendication 1, où le rapport de la section transversale d'écoulement (D) de la soupape d'échappement (5) et de l'alésage (B) du cylindre (2) se situe entre environ 0,3 et 0,4.

3. Moteur Diesel à deux temps selon l'une des revendications précédentes, où est prévue en outre une buse d'injection d'eau (8) pour introduire l'eau dans le cylindre (2).

4. Moteur Diesel à deux temps selon la revendication 3, où la buse d'injection d'eau (8) est disposée de façon que l'eau soit injectée principalement dans les gaz de combustion.

5. Moteur Diesel à deux temps selon l'une des revendications 3-4, où la buse d'injection d'eau (8) est commandée de façon qu'elle injecte l'eau après la fermeture de la soupape d'échappement (5) dans le cylindre (2).

6. Moteur Diesel à deux temps selon l'une des revendications 3 à 5, où la buse d'injection d'eau (8) est commandée de façon que l'introduction de l'eau soit terminée avant que l'injection du combustible commence.

7. Moteur Diesel à deux temps selon l'une des revendications 3 à 6, où sont prévues à chaque cylindre (2) plusieurs buses d'injection d'eau (8).
